# EUROPÄISCHE PATENTANMELDUNG

(11) **EP 2 659 778 A2**
(43) Veröffentlichungstag der Anmeldung: **06.11.2013**
(21) Anmeldenummer: 13173031.9
(22) Anmeldetag: 26.02.2010
(51) Int. Cl.: A22C 11/12, A22C 15/00

(54) **Zuführvorrichtung für Aufhängeelemente**

(30) Priorität: 04.03.2009 DE 102009011723
(62) Teilanmeldung aus: 10002027.0
(71) Anmelder: Poly-clip System GmbH & Co. KG, 65795 Hattersheim (DE)
(72) Erfinder: Reitz, Jürgen, 65760 Eschborn (DE); Waldstädt, Manfred, 55124 Mainz (DE)
(74) Vertreter: Eisenführ, Speiser & Partner

(57) **Zusammenfassung**

Die Erfindung betrifft eine Zuführvorrichtung (30) für Aufhängeelemente (S) zum Zuführen von flexiblen Aufhängeelementen (S) in eine Verpackungsmaschine, insbesondere in eine Clipmaschine, wobei die Aufhängeelemente (S) schlaufenförmig, quer zur Förderrichtung auf einem Trägerband (40) mittels eines Haftmittels lösbar angeordnet sind und mittels des Trägerbands (40) an einen Spendeort, an dem ein Aufhängeelement (S) von dem Trägerband (40) abnehmbar ist, förderbar sind. Im Bereich des Spendeorts für die Aufhängeelemente (S) ist oberhalb des Trägerbands (40) eine Niederhalteeinrichtung (50) vorgesehen.

## Beschreibung

Die vorliegende Erfindung betrifft eine Zuführvorrichtung zum Zuführen von Aufhängeelementen in eine Verpackungsmaschine.

Im Besonderen betrifft die Erfindung eine Zuführvorrichtung für Aufhängeelemente zum Zuführen von flexiblen Aufhängeelementen in eine Verpackungsmaschine, insbesondere in eine Clipmaschine, wobei die Aufhängeelemente schlaufenförmig, quer zur Förderrichtung auf einem Trägerband mittels eines Haftmittels lösbar angeordnet sind und mittels des Trägerbands an einen Spendeort, an dem ein Aufhängeelement von dem Trägerband abnehmbar ist, förderbar sind.

In der Praxis ist es bekannt, dass beispielsweise bei der Herstellung von Würsten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungsmaterial abgefüllt und durch Setzen eines zweiten Clips verschlossen. Wenn das wurstförmige Produkt bzw. das Wurstprodukt zur weiteren Verarbeitung aufgehängt werden soll, wird üblicherweise in den zweiten Clip ein Aufhängeelement, meist eine Fadenschlaufe, eingelegt und mit diesem zweiten Clip an dem Wurstprodukt befestigt. Anschließend werden die Wurstprodukte auf Speicherstangen aufgereiht, um weiterverarbeitet, beispielsweise geräuchert, zu werden.

Aus der DE-Offenlegungsschrift 10 2006 041 829 ist eine Fertigungslinie zur Herstellung von wurstförmigen Produkten bekannt, bei der die wurstförmigen Produkte in einem schlauchförmigen Verpackungshüllenmaterial ein fließfähiges Füllgut, wie Wurstbrät, Dichtmasse, Granulat und dgl. aufnehmen. Diese bekannte Fertigungslinie enthält eine Clipmaschine, in der das mit Füllgut befüllte Verpackungshüllenmaterial in einzelne wurstförmige Produkte durch Einschnüren der Verpackungshülle und Setzen von Verschlussclips im Bereich der Einschnürung portioniert wird, wobei beim Setzen der Verschlussclips mindestens ein flexibles Aufhängeelement an dem wurstförmigen Produkt angebracht werden kann, das der Clipmaschine getaktet zugeführt wird. Die Aufhängeelemente, die hier durch Fadenschlaufen gebildet sind, liegen dabei auf einem einseitig mit einem Kleber beschichteten Trägerband, von dem sie in der Clipmaschine einzeln durch eine nicht näher dargestellte Matrize eines Clipsetz- und Clipschließwerkzeugs abgezogen werden.

Bei diesen bekannten Zuführvorrichtungen für die flexiblen Aufhängeelemente besteht jedoch die Gefahr, dass die Aufhängeelemente durch den Impuls, den sie beim Lösen von dem Trägeband erfahren, aus der Matrize bzw. dem Verschlussclip heraus geschleudert werden. Dies führt dazu, dass die Aufhängeelemente nicht ordnungsgemäß an dem wurstförmigen Produkt befestigt sind. Unerwünschte Stillstandszeiten und Produktionsausfälle sind die Folge. Weiterhin können sich die herumwirbelnden Aufhängeelemente in anderen Maschinenteilen verfangen, was ebenfalls zu zusätzlichen Stillstandszeiten und Produktionsausfälle führt.

Es ist Aufgabe der vorliegenden Erfindung, eine Zuführvorrichtung für Aufhängeelemente zum Zuführen von flexiblen Aufhängeelementen in eine Verpackungsmaschine, insbesondere in eine Clipmaschine, der eingangs genannten Art bereit zu stellen, die die genannten Nachteile überwindet und die Herstellung wurstförmiger Produkte prozesssicherer gestaltet.

Die vorstehende Aufgabe wird durch die Merkmale des Anspruchs 1 gelöst. In den sich daran abschließenden Ansprüchen 2 bis 15 finden sich vorteilhafte Ausgestaltungen hierzu.

Zur Lösung dieser Aufgabe wird eine Zuführvorrichtung für Aufhängeelemente zum Zuführen von flexiblen Aufhängeelementen in eine Verpackungsmaschine, insbesondere in eine Clipmaschine vorgeschlagen, bei der die Aufhängeelemente schlaufenförmig, quer zur Förderrichtung auf einem Trägerband mittels eines Haftmittels lösbar angeordnet sind und mittels des Trägerbands an einen Spendeort, an dem ein Aufhängeelement von dem Trägerband abnehmbar ist, förderbar sind.

In einer vorteilhaften Ausgestaltung der erfindungsgemäßen Zuführvorrichtung ist im Bereich des Spendeorts für die Aufhängeelemente oberhalb des Trägerbands eine Niederhalteeinrichtung vorgesehen. Eine solche Niederhalteeinrichtung hält das gerade vom Trägerband abgezogene Aufhängeelement zumindest annähernd solange zurück, bis dieses mittels eines Verschlussclips an dem wurstförmigen Produkt befestigt und aus dem Verschließbereich der Clipmaschine ausgetragen wurde. Dadurch kann ein Herumwirbeln und Verhaken des Aufhängeelements in anderen Maschinenteilen sicher verhindert werden.

Die der Clipmaschine zugeführten Aufhängeelemente sind mit ihrer Längserstreckung quer auf einer Trägerbahn und in Zuführrichtung hintereinander angeordnet. Da lediglich das am Spendeort vorgehaltene Aufhängeelement vom Trägerband abgezogen wird, ist in einer weiterhin vorteilhaften Ausführung der erfindungsgemäßen Zuführvorrichtung ist vorgesehen, dass die Niederhalteeinrichtung ein Niederhalteelement beinhaltet, das wenigstens auf das an dem Spendeort befindliche Aufhängeelemente reversibel auflegbar ist, wobei das Niederhalteelement das Aufhängeelement zumindest abschnittsweise überdeckt.

Um ein Herumwirbeln des gerade abgezogenen Aufhängeelements sicher zu verhindern, ist vorgesehen, dass die Niederhalteeinrichtung eine Spanneinrichtung umfasst, um das Niederhalteelement mit einer vorbestimmten Kraft auf das am Spendeort befindliche Aufhängeelement aufzulegen. Diese vorbestimmte Kraft ist dabei so gewählt, dass sie einerseits groß genug ist, um das Aufhängeelement unter Spannung zu halten und so ein Herumwirbeln zu verhindern. Andererseits darf die Kraft einen Maximalwert nicht übersteigen, um das Abziehen des Aufhängeelements vom Trägerband nicht zu behindern.

Das Niederhalteelement kann auf verschiedene Weise gebildet werden. In einer bevorzugten Ausführung besteht das Niederhalteelement aus einem Flachelement, beispielsweise einem Blech, vorzugsweise aus einem rostfreien Edelstahl. Ebenso ist es möglich, das Niederhalteelement aus einem geeigneten Kunststoff herzustellen.

Da das Niederhalteelement nur einen Teil des am Spendeort vorgehaltenen Aufhängeelements überdecken muss, kann das Niederhaltelement auch durch einen Bügel gebildet sein.

Um das Überführen des Aufhängeelements auf die Fangvorrichtung nicht zu behindern, weist das Niederhalteelement im Bereich einer Fangvorrichtung eine Aussparung auf. In dem Fall, dass das Niederhalteelement durch einen Bügel gebildet ist, kann dieser in entsprechender Weise um diesen Bereich herum gebogen sein.

Wie eingangs erwähnt, werden die Aufhängeelemente der Clipmaschine getaktet zugeführt, d.h. ein Weitertransport oder Vorschub der Aufhängeelemente findet nur zwischen zwei Verschließvorgängen statt. Das am Spendeort vorgehaltene Aufhängeelement wird nur während eines Verschließvorgangs vom Trägerband abgezogen. Um den Vorschub des Trägerbandes mit den darauf befindlichen Aufhängeelementen nicht zu behindern oder das Trägerband und die Aufhängeelemente nicht zu beschädigen, ist es weiterhin vorteilhaft, wenn die Niederhalteeinrichtung eine Hebeeinrichtung aufweist, die in einer bevorzugten Ausgestaltung durch eine Hubeinrichtung gebildet ist, zum reversiblen Anheben des Niederhalteelements parallel zum Trägerband.

In einer weiterhin bevorzugten Ausgestaltung ist die Hebeeinrichtung durch eine Schwenkeinrichtung gebildet, zum reversiblen Schwenken des Niederhalteelements um wenigstens eine Achse von dem Trägerband, wodurch die Niederhalteeinrichtung weiter vereinfacht werden kann.

Zum reversiblen Anheben des Niederhalteelements weist die Hebeeinrichtung einen Antrieb auf, der in einer bevorzugten Ausführung durch einen pneumatischen Zylinder gebildet ist. Es ist selbstverständlich möglich, den Antrieb durch einen Elektromotor oder eine hydraulischen Zylinder zu realisieren.

Zur Integration der Niederhalteeinrichtung in den Produktionsprozess ist diese mit einer Steuerung verbunden ist, wodurch eine sehr genaue Anpassung der Bewegung des Niederhalteelements an den Füll- bzw. Verschließtakt möglich ist.

Um weiterhin wirksam zu verhindern, dass sich das vom Trägerband abgezogene Aufhängeelement, bspw. beim Austragen des wurstförmigen Produkts aus der Clipmaschine, an anderen Maschinenteilen verhakt, ist ein Leitelement vorgesehen.

In einer Clipmaschine, die eine Verdrängerbaugruppe mit einem erstes Paar Verdrängerscheren und einem hierzu parallel angeordneten, zweiten Paar Verdrängerscheren und eine stromabwärts der Verdrängerbaugruppe angeordneten Fangeinrichtung für die Aufhängeelemente aufweist, ist das Leitelement in bevorzugter Weise zwischen der Fangeinrichtung und der unteren Verdrängerschere des in Füllausstoßrichtung vorderen, zur Fangvorrichtung weisenden Verdrängerscherenpaares positioniert. Hierdurch kann wirksam verhindert werden, dass sich das Aufhängeelement an dieser Verdrängerschere verhakt und so einen Produktionsausfall verursacht.

Um den vorbeschriebenen positiven Effekt des Leitelements weiter zu erhöhen, ist dieses räumlich gebogen und bildet zumindest annähernd die Kontur der unteren Verdrängerschere des in Füllausstoßrichtung vorderen Verdrängerscherenpaares nach.

Das Leitelement ist in eine bevorzugten Ausgestaltung der erfindungsgemäßen Zuführvorrichtung an dieser befestigt. So kann seine Position optimal an die

Zuführvorrichtung und die Verdrängerbaugruppe angepasst werden. Da das Leitelement ein feststehendes Bauteil ist, kann es aber auch an einer geeigneten Stelle am Maschinenrahmen befestigt sein.

Die Aufhängeelemente sind üblicherweise Fadenschlaufen. Um eine Beschädigung der Aufhängeelemente zu vermeiden, wenn diese an dem Leitelement entlang geführt werden, sollte das Leitelement keine schaffen Ecken oder Kanten besitzen. Es weist daher vorteilhaft einen zumindest annähernd kreisförmigen Querschnitt auf.

Das vorbeschriebene Leitelement kann selbstverständlich in jeder Clipmaschine eingesetzt werden, auch wenn diese nicht über die erfindungsgemäße Zuführvorrichtung verfügt.

Weitere vorteilhafte Ausgestaltungen sowie ein Ausführungsbeispiel der Erfindung werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine perspektivische Ansicht der erfindungsgemäßen Zuführvorrichtung in einer nur teilweise dargestellten Clipmaschine;
- Fig. 2:: eine Seitenansicht der Zuführvorrichtung gemäß Fig. 1; und
- Fig. 3:: eine Draufsicht auf die in Fig. 1 dargestellten Zuführeinrichtung.

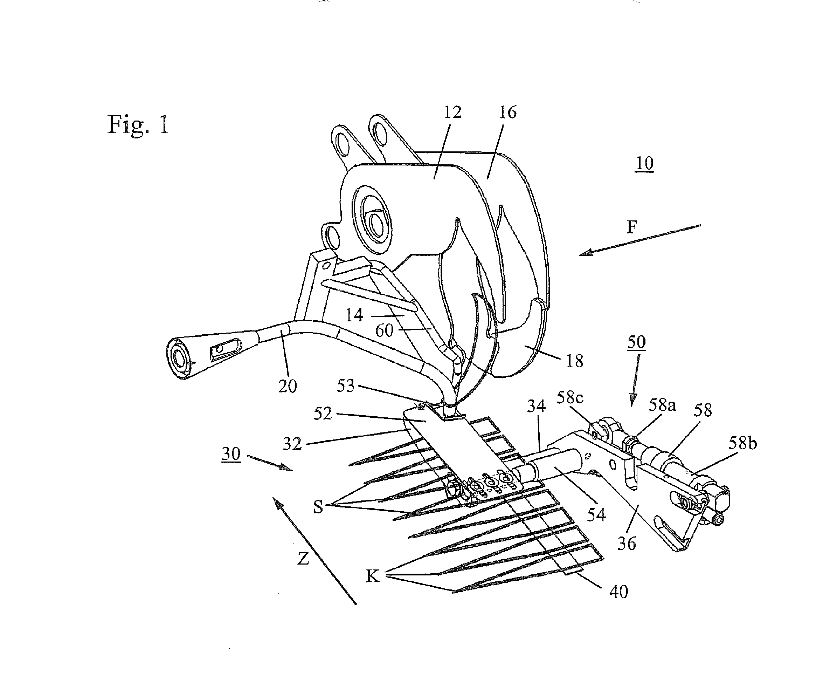

Figur 1 zeigt eine perspektivische Ansicht der erfindungsgemäßen Zuführvorrichtung in einer nur teilweise dargestellten und an sich bekannten Clipmaschine zur Herstellung wurstförmiger Produkte. Diese bekannte Clipmaschine weist eine Verdrängerbaugruppe 10 auf, bestehend aus einem ersten und einem zweiten Paar Verdrängerscheren 12, 14 und 16, 18, die parallel zueinander ausgerichtet und um eine gemeinsame, nicht näherbezeichnete Achse zwischen einer Freigabeposition, wie sie in Fig. 1 dargestellt ist, und einer Einschnürposition senkrecht zur Füllausstoßrichtung F reversibel verschwenkbar sind.

Die Clipmaschine weist weiterhin eine Fangeinrichtung für die an den wurstförmigen Produkten oder Wurstprodukten anbringbaren Aufhängeelemente S auf. Von dieser Fangvorrichtung ist in Fig. 1 lediglich die Fängernadel 20 dargestellt. Diese reicht mit ihrem freien, in der Darstellung rechten Ende in den Verschließbereich der Clipmaschine. An ihrem, in Fig. 1 linken Ende schließt sich eine nicht dargestellte Transportvorrichtung an, wie bspw. eine Förderschnecke, um die an den Aufhängeelementen, wie z.B. Fadenschlaufen S, erfassten Wurstprodukte aus der Clipmaschine auszutragen.

Fig. 1 zeigt weiterhin die erfindungsgemäße Zuführvorrichtung 30 zum Zuführen der an den Wurstprodukt anzubringenden Aufhängeelemente oder Fadenschlaufen S in Zuführrichtung Z, senkrecht zur Füllausstoßrichtung F.

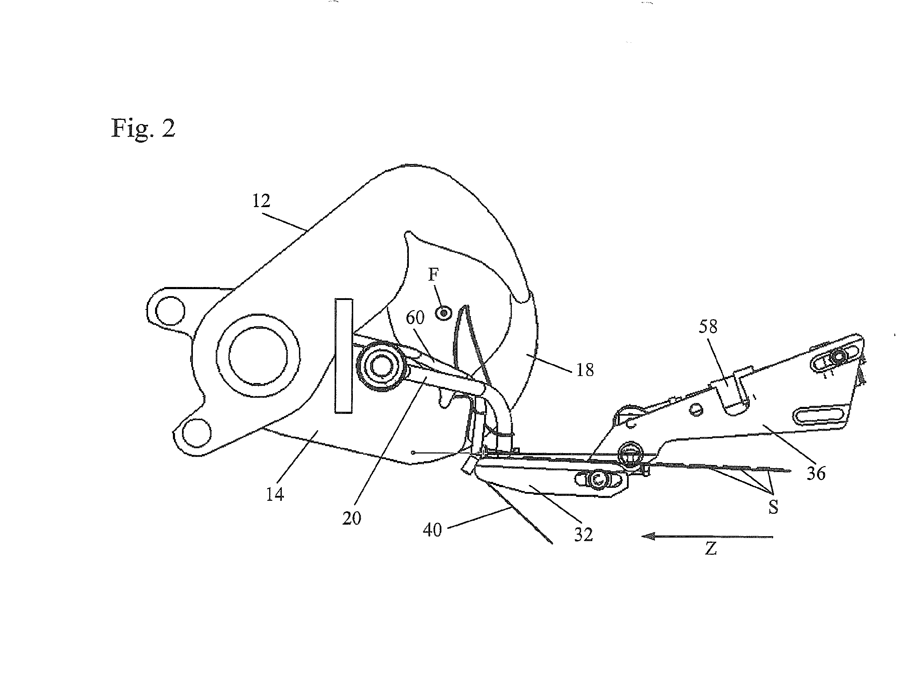

Die Zuführvorrichtung 30 beinhaltet ein im Querschnitt zumindest annähernd keilförmiges Führungselement 32, das mittels eines Bolzens 34 an einem Träger 36 befestigt ist. Das im wesentlichen horizontal ausgerichtete Führungselement 32 weist mit seiner schmaleren Seite in Richtung des Verschließbereichs der Clipmaschine, senkrecht zur Füllausstoßrichtung F des Füllguts. Die Erstreckungsebene des Führungselements 32 liegt unterhalb der gedachten Mittellängsachse der entstehenden Wurstprodukte bzw. eines nicht dargestellten Füllrohrs, dessen Mittellängsachse zumindest annähernd parallel zur Füllausstoßrichtung F verläuft. Der Bolzen 34, an dessen in Fig. 1 linken Ende das Führungselement 32 im Bereich seines breiten Endes befestigt ist, erstreckt sich ebenfalls parallel zur Füllausstoßrichtung F. Das rechte Ende des Bolzens 34 ist an dem zur Clipmaschine weisenden Ende des Trägers 36 befestigt, der annähernd horizontal sowie senkrecht zum Bolzen 34 ausgerichtet ist. Die Befestigung des Führungselements 32 am Bolzen 34 ist, wie in Fig. 2 zu sehen, mittels eines Langlochs ausgeführt, wodurch eine Lageeinstellung des Führungselements 32 ermöglicht wird.

Ein die Aufhängeelemente S tragendes Trägerband 40 ist so um das Führungselement 32 herumgeführt, dass es auf der nach oben weisenden Fläche des Führungselements 32 aufliegt, um die schmale, zum Verschließbereich der Clip-maschine weisende Seite des Führungselements 32 herum geführt und, wie ebenfalls aus Fig. 2 ersichtlich wird, schließlich unterhalb des Führungselements 32 von der Clipmaschine weg geführt wird.

Auf der in der Fig. 1 nach oben weisenden Seite des Trägerbands 40 sind Aufhängeelemente in Form von in Fig. 1 schematisch wiedergegebenen Fadenschlaufen S angeordnet. Die im Wesentlichen ovalen bzw. birnenförmig verlaufenden Fadenschlaufen S, deren Schlaufenlängsseiten am in Fig. 1 linken Oval-bzw. Schlaufenende mit einem Knoten K verknüpft sind, sind mit ihrer größten Längsachse quer zum Trägerband 40 und hintereinander auf diesem ausgerichtet. Sie liegen flach auf dem Trägerband 40 auf und überragen es an beiden Seiten. Die Fadenschlaufen S sind in bekannter Weise auf dem Trägerband 40 lösbar fixiert, bspw. mittels eines auf dem Trägerband 40 aufgetragenen Klebers.

Die Zuführvorrichtung 30 umfasst weiterhin eine Niederhalteeinrichtung 50 mit einem Niederhalteelement 52, einer Schwenkachse 54 und einem Schwenkantrieb 58.

Das Niederhalteelement 52 der Niederhalteeinrichtung 50 ist in diesem Ausführungsbeispiel durch ein Flachelement gebildet. Das Flachelement, ein vorzugsweise aus einem rostfreien Edelstahl bestehendes und im Wesentlichen rechteckiges Blech 52, ist im Wesentlichen horizontal und in seiner Längserstreckung in Zuführrichtung Z, d.h. senkrecht zur Füllausstoßrichtung F ausgerichtet. An der in Fig. 1 rechten Seite seines zur Clipmaschine weisenden und den Spendeort zumindest teilweise überdeckenden Endes ist in dem Blech 52 eine Ausnehmung 53 vorgesehen. Wie in Fig. 1 zu sehen ist, erstreckt sich die Spitze der Fängernadel 20 der nicht näher dargestellten Fangvorrichtung bis unmittelbar über die Ausnehmung 53. Als Spendeort ist im Zusammenhang mit der erfindungsgemäßen Zuführvorrichtung 30 die Position der in Zuführrichtung Z vordersten Fadenschlaufen S zu verstehen, aus der sie in an sich bekannter Weise durch eines der Verschließwerkzeuge vom Trägerband 40 abgezogen und anschließend zusammen mit dem entsprechenden Verschlussclip an dem wurstförmigen Produkt befestigt wird.

Das Blech 52 ist mit seinem von der Clipmaschine weg weisenden Ende mit der Schwenkachse 54 verbunden. Die Befestigung des Blechs 52 an der Schwenkachse 54 ist ebenfalls mittels Langlöcher ausgeführt, wodurch eine Lageeinstellung des Blechs 52 ermöglicht wird. Die im Wesentlichen zylindrische Schwenkachse 54 verläuft parallel zum Bolzen 34 und durchdringt und überragt den Träger 36 oberhalb der Anbindung des Bolzens 34 an den Träger 36 und entgegen der Zuführrichtung Z der Fadenschlaufen S versetzt. Die Durchführung der Schwenkachse 54 durch den Träger 36 bildet ein Lager, in dem die Schwenkachse 54 um ihre Längsachse drehbar gehalten ist.

An dem aus der dem Blechs 52 gegenüberliegenden Seite des Trägers 36 herausragenden Ende der Schwenkachse 54 ist ein Schwenkantrieb 58 angeordnet. Der Schwenkantrieb 58 ist im vorliegenden Ausführungsbeispiel als Kolben/Zylinder-Antrieb ausgebildet, umfassend einen Kolben 58a und einen Zylinder 58b sowie einen Schwenkhebel 58c. Kolben 58a und Zylinder 58b sind parallel neben dem Träger 36 angeordnet. Das von der Clipmaschine weg weisende Ende des Zylinders 58b ist am Träger 36 verschraubt. Das gegenüberliegende Ende des Kolbens 58a ist mit einem ersten Ende des Schwenkhebels 58c verschwenkbar verbunden. Das zweite Ende des Schwenkhebels 58c ist fest an dem in Fig. 1 dargestellten rechten Ende der Schwenkachse 54 angeordnet, die so mittels des Schwenkantriebs 58 um ihre Längsachse verschwenkbar ist.

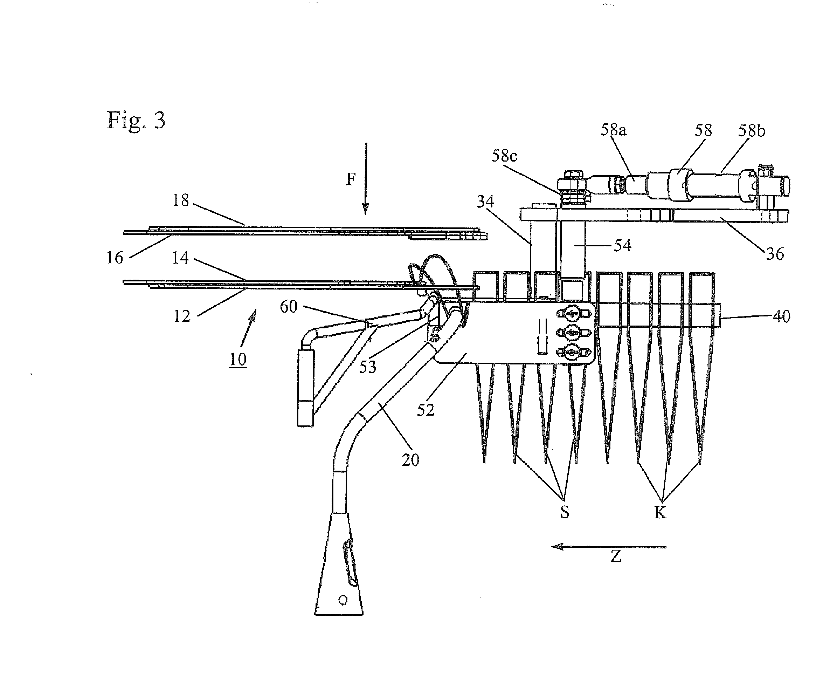

Die Zuführvorrichtung 30 enthält des Weiteren ein Leitelement 60, welches in einem Bereich zwischen dem Spendeort, der Fängernadel 20 und dem ersten Verdrängerscherenpaar 12, 14 angeordnet ist, wie dies auch aus den Fig. 2 und 3 hervorgeht. Das Leitelement 60 besteht in diesem Ausführungsbeispiel aus einem mehrfach räumlich gebogenen Rohr. Es ist mit einem, vom Spendeort weg weisenden Ende fest mit einem nicht dargestellten Teil des Maschinenrahmens verbunden. Das freie Ende des Leitelements 60 ragt bis annähernd in den Spendeort hinein, endet aber leicht unterhalb und neben diesem. Der in den Verschließbereich der Clipmaschine reichende vordere Abschnitt des Leitelements 60 ist so geformt, dass er die Kontur der Verdrängerschere 14 des ersten Verdrängerscherenpaares 12, 14 in etwa nachbildet und diese in Richtung der Zuführeinrichtung 30 sowie nach oben, d.h. in Richtung der Mittellängsachse des nichtgezeigten Füllrohrs zumindest geringfügig überragt. Das Leitelement 60 ist dabei so angeordnet, dass der in den Verschließbereich ragende Abschnitt wenigstens abschnittsweise parallel zum ersten Verdrängerscherenpaar 12, 14 und in einer gedachten, sich senkrecht erstreckenden Ebene zwischen dem ersten Verdrängerscherenpaar 12, 14 und der Spitze der Fängernadel 20 verläuft. Als der Verschließbereich der Clipmaschine ist der Bereich unmittelbar um die bzw. zwischen den beispielsweise zum Bilden eines füllgutfreien Verpackungshüllenzopfes gespreizten Verdrängerscheren 12, 14, 16, 18 zu verstehen.

Bei der Herstellung von Würsten wird in bekannter Weise zunächst das Wurstbrät von einer Füllmaschine über ein Füllrohr in eine zu befüllende, bereits einseitig mittels eines ersten Clips verschlossene schlauchförmige Verpackungshülle gefördert, die hierzu auf dem Füllrohr gespeichert ist und beim Füllen durch den Fülldruck von diesem abgezogen wird. Die Verdrängerscheren 12, 14, 16, 18 befinden sich bei diesem Füllvorgang in einer geöffneten Position oder Freigabeposition, wie sie in der Fig. 1 dargestellt ist. Ist eine vorbestimmte oder gewünschte Menge Wurstbrät in die schlauchförmige Verpackungshülle gefüllt, werden die Verdrängerscheren 12, 14, 16, 18 in ebenfalls bekannter Weise in die Einschnürposition bewegt, d.h., sie fahren paarweise radial aufeinander zu. Anschließend werden die Verdrängerscherenpaare 12, 14, 16, 18 in axialer Richtung auseinander gefahren, wodurch ein füllgutfreier Zopf gebildet wird, auf den zum Verschließen der eben gefüllten schlauchförmige Verpackungshülle durch radiales Aufeinanderzubewegen der Verschließwerkzeuge, üblicher Weise als Stempel und Matrize ausgeführt, wenigstens ein weiterer Clip gesetzt wird. In ihrer Aufwärtsbewegung, d.h. in ihrer Bewegung in Richtung der Zopfachse, fädelt die Matrize als unteres Verschließwerkzeug bzw. der in der Matrize befindliche Clip in das vom Trägerband 40 überstehende Ende der sich am Spendeort befindendlichen Fadenschlaufe S ein. Dabei wird die Fadenschlaufe S vom Trägerband 40 gezogen.

Das Blech 52, das mittels des Schwenkantriebs 58 auf das Trägerband 40 abgesenkt wurde, überdeckt währenddessen die am Spendeort befindliche Fadenschlaufe S zumindest teilweise und übt dabei eine vordefinierte Kraft auf die Fadenschlaufe S aus. Diese vorbestimmte Kraft ist so gewählt, dass die Fadenschlaufe S unter Spannung durch die in Richtung der Zopfachse des füllgutfreien Zopfes bewegte Matrize vom Trägerband 40 abgezogen werden kann. Hierdurch wird verhindert, dass die sich vom Trägerband 40 lösende Fadenschlaufe S durch den Impuls, den sie durch die Abzugskraft im Moment des Lösens vom Trägerband 40 erfährt, nach dem Ablösen vom Trägerband 40 herumwirbelt und aus der Matrize bzw. dem Verschlussclip herausspringt oder sich an hierzu benachbarten Maschinenteilen verhakt. Das Blech 52 liegt dabei zumindest solange auf der Fadenschlaufe S auf, bis die Fadenschlaufe S um eine Länge vom Trägerband 40 abgezogen worden ist, die der Breite des Trägerbandes 40 und damit der Breite der Fixierung entspricht.

Nachdem die Fadenschlaufe S vollständig vom Trägerband 40 abgelöst worden ist und durch den Clip an dem füllgutfreien Zopf angebracht wurde, wird das vom Verschlussclip weg weisende Ende der Fadenschlaufe S im Bereich der Ausnehmung 53 am Blech 52 vorbeigeführt und auf die Fängernadel 20 überführt. Die Fadenschlaufe S ist jetzt mit ihrem oberen Ende mittels des Verschlussclips an dem Wurstprodukt befestigt und mit ihrem unteren Ende auf die Fängernadel 20 der Fangvorrichtung aufgezogen. Die Verdrängerscherenpaare 12, 14, 16, 18 sowie die Verschließwerkzeuge fahren von ihrer Einschnür- bzw. Verschließposition wieder auseinander in ihre Freigabeposition. Das fertig verpackte Wurstprodukt wird in Füllausstoßrichtung F stromabwärts aus der Clipmaschine ausgetragen, nachdem es vom übrigen Vorrat an Verpackungshüllenmaterial getrennt worden ist.

Beim Austragen des Wurstprodukts aus der Clipmaschine wird dieses, bspw. mittels eines entsprechenden Förderbandes, in Richtung seiner Mittellängsachse in Füllausstoßrichtung F bewegt. Dabei wird die Fadenschlaufe S, deren freies Ende im Bereich der Ausnehmung 53 des Blechs 52 auf das dort befindliche freie Ende der Fängernadel 20 überführt wurde, auf der Fängernadel 20 in Austragrichtung bewegt. Wie im Besonderen in Fig. 3 zu sehen ist, wird der vordere Teil der Fadenschlaufe S, also der in Richtung der Zuführvorrichtung 30 weisende Abschnitt, an der von der Clipmaschine weg weisenden Seite der Fängernadel 20 geführt. Der hintere Teil der Fadenschlaufe S, also der zur Clipmaschine weisende Abschnitt, wird zwischen der Fängernadel 20 und dem Leitelement 60 hindurch geführt. Das Leitelement 60 hält den hinteren Teil der Fadenschlaufe S von dem ersten Verdrängerscherenpaar 12, 14, bzw. der unteren Verdrängerschere 14 fern. Hierdurch wird verhindert, dass sich die Fadenschlaufe S beim Austragen des Wurstprodukts aus der Clipmaschine mit ihrem hinteren Teil in den Verdrängerscheren 12, 14 verhakt.

Nachdem die Verschließwerkzeuge in ihre Ausgangsstellung zurück bewegt worden sind, d.h. in radialer Richtung von der Zopfachse weg, wird, vorzugsweise gleichzeitig mit dem nächsten Füllvorgang, eine neue Fadenschlaufe S an den Spendeort gefördert. Hierzu wird zunächst das Blech 52, angetrieben vom Schwenkantrieb 58, vom Trägerband 40 abgehoben. Anschließend wird durch Vorschub des Trägerbands 40 in Zuführrichtung Z die nächste Fadenschlaufe S am Spendeort platziert und das Blech 52 wieder auf diese abgesenkt. Der Schwenkantrieb 58 ist mit der Steuerung der Clipmaschine verbunden und kann so optimal an den Vorschubtakt für die Fadenschlaufen S bzw. den Fülltakt der Wurstprodukte angepasst werden.

Die Kraft, mit der das Blech 52 auf das Trägerband 40 und damit auf die am Spendeort befindliche Fadenschlaufe S einwirkt, kann durch einen fest eingestellten Hub des Schwenkantriebs 58 vorbestimmt oder über die mit dem Schwenkantrieb 58 verbundene Steuerung frei einstellbar sein.

Wie bereits erwähnt, liegt das Blech 52 zumindest abschnittsweise auf dem Trägerband 40 bzw. der Fadenschlaufe S auf. Dieses nur teilweise Aufliegen kann aber auch dadurch realisiert werden, dass das Niederhalteelement durch einen Bügel gebildet wird, der auf der am Spendeort bereitgehaltenen Fadenschlaufe S aufliegt und zur Ausbildung der Ausnehmung 53 ggf. um die Position der Spitze der Fängernadel 20 herum gebogen ist. In einer einfachen Ausführung ist das Niederhalteelement durch einen geraden Stift gebildet, der im Bereich des Trägerbandes auf der Fadenschlaufe S aufliegt.

Alternativ zum Schwenkantrieb 58 ist es ebenfalls möglich, das Niederhalteelement 52 mittels einer Linearbewegung auf das Trägerband 40 zu zu bewegen. Dies kann beispielsweise durch einen Kolben/Zylinder-Antrieb realisiert werden, der zumindest annähernd senkrecht über der Zuführvorrichtung 30 angeordnet ist und an dessen zur Zuführvorrichtung 30 weisenden Ende das entsprechende Niederhalteelement 52 angeordnet ist.

Das Leitelement 60 ist im dargestellten Ausführungsbeispiel aus einem Rundmaterial gefertigt, hier einem Rohr. Es kann selbstverständlich ebenso aus Vollmaterial ausgeführt sein. Auch eine vom runden Querschnitt abweichende Form ist denkbar, solange gewährleistet werden kann, dass die Fadenschlaufen S bei ihrer Bewegung entlang des Leitelements 60 nicht behindert oder beschädigt werden.

Weiterhin ist das Leitelement 60 vorliegend an einem feststehenden Teil des Maschinenrahmens angeordnet. Als Teil der Zuführvorrichtung 30 kann es selbstverständlich auch an dieser angebracht sein, bspw. am Träger 36 oder dem Führungselement 32.

Im dargestellten Ausführungsbeispiel ist die untere Verdrängerschere 14 des ersten Verdrängerscherenpaares 12, 14 kürzer ausgeführt, als die Verdrängerscheren 12, 16, 18. Hierdurch wird die Fadenschlaufe S bereits bei einem reduzierten Öffnungswinkel der Verdrängerscheren 12, 14 freigegeben. Das Leitelement 60 ist dieser gekürzten Verdrängerschere 14 angepasst. Sollen identische, also gleichlange Verdrängerscheren zum Einsatz kommen, kann das Leitelement 60 natürlich auch der dann längeren Verdrängerschere 14 angepasst werden. Dies ist im einfachsten Fall durch einen Austausch des Leitelements 60 realisierbar. Denkbar ist ebenfalls, den in den Verschließbereich hineinragenden Teil des Leitelements 60 mit gelenkigen Abschnitten zu versehen, um eine individuelle Anpassung vorzunehmen oder eine manuelle Nachjustierung zu ermöglichen.

## Patentansprüche

1. Zuführvorrichtung zum Zuführen von flexiblen Aufhängeelementen (S) in eine Verpackungsmaschine, insbesondere in eine Clipmaschine, wobei die Clipmaschine eine Verdrängerbaugruppe mit einem erstes Paar Verdrängerscheren (12, 14) und einem hierzu parallel angeordneten, zweiten Paar Verdrängerscheren (16, 18) und eine stromabwärts der Verdrängerbaugruppe angeordneten Fangeinrichtung für die Aufhängeelemente (S) aufweist,
**dadurch gekennzeichnet, dass** ein Leitelement (60) zwischen der Fangeinrichtung und der unteren Verdrängerschere (14) des in Füllausstoßrichtung (F) vorderen Verdrängerscherenpaares (12, 14) positioniert ist.

2. Zuführvorrichtung nach Anspruch 1,
**dadurch gekennzeichnet, dass** das Leitelement (60) räumlich gebogen und zumindest annähernd die Kontur der unteren Verdrängerschere (14) des in Füllausstoßrichtung (F) vorderen Verdrängerscherenpaares (12, 14) nachbildet.

3. Zuführvorrichtung nach einem der Ansprüche 1 oder 2,
**dadurch gekennzeichnet, dass** das Leitelement (60) an der Zuführvorrichtung (30) angeordnet ist.

4. Zuführvorrichtung nach einem der Ansprüche 1 oder 2,
**dadurch gekennzeichnet, dass** das Leitelement (60) an dem Maschinenrahmen angeordnet ist.

5. Zuführvorrichtung nach einem der Ansprüche 1 bis 4,
**dadurch gekennzeichnet, dass** das Leitelement (60) einen zumindest annähernd kreisförmigen Querschnitt aufweist.
